# EUROPÄISCHE PATENTSCHRIFT

(11) **EP 2 722 123 B1**
(45) Veröffentlichungstag und Bekanntmachung des Hinweises auf die Patenterteilung: **13.01.2021**
(21) Anmeldenummer: 12188692.3
(22) Anmeldetag: 16.10.2012
(51) Int. Cl.: B23F 23/00, B24B 55/02, B23Q 11/10

(54) **Verfahren zum spanabhebenden Bearbeiten eines Bauteils und Verwendung eines Fluidstrahls**
Method for machining a component and use of a fluid jet
Procédé de traitement par enlèvement de copeaux d'un composant et utilisation d'un faisceau de liquide

(43) Veröffentlichungstag der Anmeldung: 23.04.2014
(73) Patentinhaber: Klingelnberg AG, 8050 Zürich (CH)
(72) Erfinder: Ribbeck, Karl Martin, 42897 Remscheid (DE)
(74) Vertreter: Heusch, Christian

(56) Entgegenhaltungen:
- DE-A1-102010 005 630
- DE-U1- 9 101 470
- DE-U1- 20 319 125
- US-A1- 2005 009 454
- US-A1- 2009 047 875

## Beschreibung

Die vorliegende Erfindung betrifft Verfahren zum Kühlen und/oder Schmieren von Bauteilen/Werkstücken während oder nach einer spanenden Bearbeitung.

### Stand der Technik

Es ist bekannt, dass man während einer spanenden Metallbearbeitung ein Kühl- oder Schmiermittel einsetzt. Heutige Bearbeitungsmaschinen und -zentren sind daher oft mit einer leistungsfähigen Flüssigmittelversorgung ausgestattet. Meistens wird ein schwanenhalsartiger Kopf manuell so eingestellt, dass der Flüssigkeitsstrahl, der aus dem Kopf austritt, die zu bearbeitenden Stelle trifft. Neben der reinen Kühl- oder Schmierwirkung geht es auch darum die Späne, die anfallen, effizient abzutransportieren.

Aus der US-Patentanmeldung US 2009/047875 A1, die die Basis für den Oberbegriff des Anspruchs 1 bildet, ist ein Ansatz bekannt, der es ermöglicht eine Kühlflüssigkeitsdüse relativ zu einem Werkstück zu platzieren. Dabei kommt eine Kühlflüssigkeitsdüse zum Einsatz, die um eine Schwenkachse geschwenkt werden kann. Die Kühlflüssigkeitsdüse ist so angeordnet, dass sie entlang einer kreisbogenförmigen Bahn verstellt werden kann.

Aus der US-Patentanmeldung US 2005/009454 A1 ist eine Kühlmittelvorrichtung bekannt, die eine ringförmige Konfiguration aufweist. Diese ringförmige Konfiguration umfasst einen Kühlmittelkopf, der ringförmig um das Spindelgehäuse einer Schleifscheibe angeordnet ist.

Es hat sich gezeigt, dass die Einstellung der Flüssigmittelversorgung nicht immer optimal ist. Es kann somit unter Umständen nicht die volle Wirkung erzielt werden. Andererseits gibt es immer wieder Situationen, in denen es beim Bewegen der Maschinenachsen zu einer Kollision mit Elementen der Flüssigmittelversorgung kommt.

Es stellt sich daher die Aufgabe einen technischen Ansatz zum besonders effektiven Kühlen und/oder Schmieren von Werkstücken während einer spanenden Bearbeitung. Dabei soll für diese Bearbeitung die jeweils optimale Position der Elemente eines entsprechenden Kühl- bzw. Schmiersystems zum Einsatz kommen.

Gemäss Erfindung geht es um ein Verfahren zum Einsetzen eines Kühl- oder Schmiermittels in flüssiger Form oder in Gasform (hier allgemein als Fluid bezeichnet) bei der spanenden Bearbeitung von Metallwerkstücken. Insbesondere geht es um die spanende Nassbearbeitung von Zahnrädern.

Die Aufgabe wird erfindungsgemäß durch ein Verfahren gemäß Patentanspruch 1 gelöst. Vorteilhafte Ausgestaltungen der Erfindung bilden die Gegenstände der abhängigen Patentansprüche.

Das Verfahren der Erfindung ist zur spanabhebenden Nassbearbeitung von Werkstücken/Bauteilen ausgelegt und basiert auf dem Einsatz einer extrem leistungsfähigen Fluidmittelversorgung, die eine hohe Förderleistung und eine kurze Förderdistanz aufweist. Um eine hohe Förderleistung und eine kurze Förderdistanz gewährleisten zu können, setzt die Erfindung auf eine starr montierbare Fluidmittelversorgung statt auf flexible Leitungen und schwanenhalsartige schwenkbare Auslassdüsen.

Um die Auslassdüse(n) der starren Fluidmittelversorgung optimal ausrichten zu können, wird gemäss Erfindung in einem computer-gestützten Optimierungsverfahren mindestens eine geeignete Position für eine Austrittsdüse der Fluidmittelversorgung ermittelt und es wird die Position der Austrittsdüse gemäss Vorgabe eingestellt, bevor die Nassbearbeitung des Werkstücks beginnt.

Gemäss Erfindung wird beim Ermitteln der geeigneten Position für eine Austrittsdüse eine Art Kollisionsberechnung durchgeführt, um zu verhindern, dass es zwischen der Austrittsdüse oder anderen Elementen der Fluidmittelversorgung und der Bearbeitungsmaschine (z.B. dem Werkzeug der Bearbeitungsmaschine) zu einer Kollision kommt.

Die Optimierung der Fluidmittelversorgung führt einerseits zu einem weniger stark ausgeprägten Verschleissverhalten der Werkzeuge. Andererseits kann das Einrichten der Bearbeitungsmaschine schneller ausgeführt werden und es wird verhindert, dass es bei Fehleinstellungen zu einer Kollision von Bauteilen der Fluidmittelversorgung mit dem Werkzeug oder Werkstück kommt. Das Verfahren der Erfindung bietet somit zahlreiche Vorteile, die sich z.B. als Reduktion der Werkzeugkosten und durch eine Verkürzung der Stillstandszeit der Bearbeitungsmaschine zeigen. Die Stillstandszeit der Bearbeitungsmaschine kann nämlich deutlich reduziert werden, wenn bereits im Vorfeld die geeignete Position für eine Austrittsdüse der Fluidmittelversorgung ermittelt wurde. Ausserdem wird die Fehlerhäufigkeit reduziert.

Das Verfahren der Erfindung kann nicht nur zum Kühlen oder Schmieren, sondern auch zu Reinigungszwecken durchgeführt werden. D.h., die Erfindung lässt sich auf verschiedene Austrittsdüsen und/oder Fluide anwenden, unabhängig davon, ob es um das Schmieren, Kühlen oder Reinigen geht.

Das Verfahren der Erfindung kann nicht nur bei der spanabhebenden Metallbearbeitung von Werkstücken zum Einsatz kommen, sondern es kann zum Beispiel auch beim Abrichten von Werkzeugen mit einem Abrichtwerkzeug (z.B. mit einer Abrichtscheibe) eingesetzt werden. Das Verfahren lässt sich auch beim (Nach-)Schleifen von Werkzeugen (z.B. Stabmessern) oder beim Entgraten von Werkstücken einsetzen. In diesen Fällen handelt es sich bei dem sogenannten Werkstück um ein Bauteil oder um ein Werkzeug, das zu bearbeiten ist. Der Begriff Werkstück ist daher entsprechend breit auszulegen. Im Folgenden wird das Werkstück daher auch als zu bearbeitendes Bauteil bezeichnet.

Die Bezugszeichenliste ist Bestandteil der Offenbarung.

### ZEICHNUNGEN

Die Figuren werden zusammenhängend und übergreifend beschrieben. Ausführungsbeispiele der Erfindung werden im Folgenden unter Bezugnahme auf die Zeichnungen näher beschrieben.
- **FIG. 1**: zeigt eine perspektivische Abbildung einer mehrachsigen Schleifmaschine in der die Erfindung zum Einsatz kommen kann;
- **FIG. 2A**: zeigt eine perspektivische Ansicht eines Teils einer Schleifmaschine (z.B. einer Schleifmaschine nach Fig. 1), wobei das unmittelbare Umfeld eines Schleiftopfs und einer starr angeordneten Fluidmittelversorgung gezeigt ist;
- **FIG. 2B**: zeigt eine perspektivische Ansicht eines größeren Ausschnitts der Schleifmaschine nach Fig. 2A, wobei zusätzlich zum Schleiftopf und der starr angeordneten Fluidmittelversorgung auch eine schräg angestellte Werkstückspindel mit Werkstück (hier ein Kegelrad) gezeigt ist;
- **FIG. 3A**: zeigt eine schematische Seitenansicht eines Schleiftopfs und eines Werkstücks (hier ein Kegelrad) einer Schleifmaschine (z.B. einer Schleifmaschine nach Fig. 2A und 2B), wobei im gezeigten Moment der Schleiftopf und das Werkstück nicht im Eingriff stehen;
- **FIG. 3B**: zeigt eine schematische Seitenansicht des Schleiftopfs und des Werkstücks der Fig. 3A, wobei das Schwenken der Werkstückspindel samt Werkstück gezeigt ist;
- **FIG. 3C**: zeigt eine schematische Seitenansicht des Schleiftopfs und des Werkstücks der Fig. 3A, wobei das Ausführen einer Linearverschiebung der Werkstückspindel samt Werkstück gezeigt ist, das vorher (siehe Fig. 3B) geschwenkt wurde;
- **FIG. 3D**: zeigt eine schematische Seitenansicht des Schleiftopfs und des Werkstücks der Fig. 3A, wobei das Ausführen einer Annäherungsverschiebung der Werkstückspindel samt Werkstück gezeigt ist, das vorher (siehe Fig. 3B) geschwenkt und linear verschoben (siehe Fig. 3C) wurde;
- **FIG. 3E**: zeigt eine schematische Seitenansicht des Schleiftopfs und des Werkstücks der Fig. 3A, wobei das Ausführen einer Eintauch- und Schwenkbewegung der Werkstückspindel samt Werkstück gezeigt ist, nachdem die beispielhaften Zustellbewegungen der Figuren 3B, 3C und 3D ausgeführt wurden;
- **FIG. 3F**: zeigt eine Seitenansicht des stark schematisierten Bewegungsraumes der Werkstückspindel samt Werkstück;
- **FIG. 4A**: zeigt einen Abschnitt des Bewegungsraumes nach Fig. 3F, wobei stark schematisiert links neben dem Werkzeug eine beispielhafte Austrittsdüse samt Fluidzufuhr dargestellt ist;
- **FIG. 4B**: zeigt erneut den Abschnitt des Bewegungsraumes nach Fig. 3F, wobei stark schematisiert rechts neben dem Werkzeug eine beispielhafte Austrittsdüse samt Fluidzufuhr dargestellt ist;
- **FIG. 5**: zeigt eine stark schematisierte Unteransicht eines als Werkzeug dienenden Schleiftopfs und einer ringförmig angelegten Fluidzufuhrvorrichtung, die mit einer beispielhaften Austrittsdüse bestückt ist;
- **FIG. 6**: zeigt eine stark schematisierte Ansicht einer Anzeige, auf der eine Unteransicht eines als Werkzeug dienenden Schleiftopfs und einer ringförmig angelegten Fluidzufuhrvorrichtung gezeigt ist, wobei zwei Positionen zum Bestücken mit Austrittsdüsen grafisch hervorgehoben sind.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Es geht hier um ein spanabhebendes Verfahren zum Bearbeiten von Metallwerkstücken 30, wie zum Beispiel Zahnrädern, Wellen, Kupplungsteilen und dergleichen.

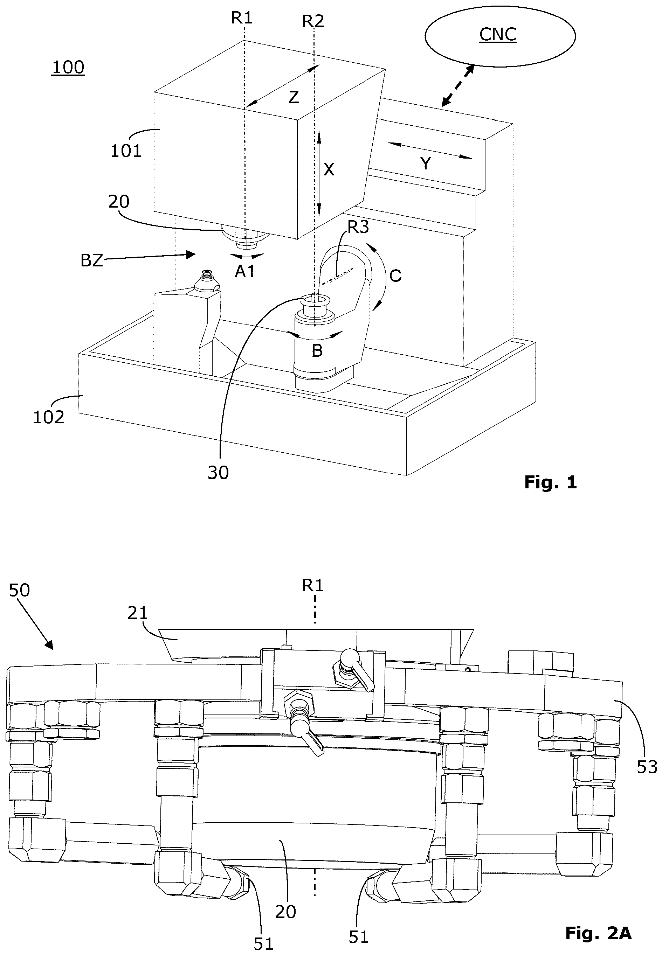

Das Verfahren der Erfindung ist speziell zum spanabhebenden Nassbearbeiten eines Bauteils/Werkstücks 30 auf einer Bearbeitungsmaschine 100 ausgelegt. Eine beispielhafte Bearbeitungsmaschine 100 ist in Fig. 1 mit seinen wesentlichen Elementen gezeigt. In Fig. 1 ist konkret eine Schleifmaschine 100 gezeigt.

Die Erfindung kommt im Zusammenhang mit Bearbeitungsmaschinen 100 zum Einsatz, die mindestens mit einer CNC gesteuerten Werkzeugachse R1 und einer CNC gesteuerten Werkstückachse R2 ausgestattet sind. Die in Fig. 1 gezeigte Bearbeitungsmaschine 100 hat mindestens sechs CNC gesteuerte Achsen und sie umfasst eine CNC-Steuerung, die hier andeutungsweise durch ein Oval dargestellt ist. Bei den genannten Achsen handelt es sich beispielsweise um
- eine Linearachse X, die Vertikalbewegungen eines Werkzeugträgers 101 in Bezug zu einem Maschinenbett 102 ausführt;
- eine Linearachse Y, die erste Horizontalbewegungen des Werkzeugträgers 101 in Bezug zu dem Maschinenbett 102 ausführt;
- eine Linearachse Z, die zweite Horizontalbewegungen des Werkzeugträgers 101 in Bezug zu dem Maschinenbett 102 ausführt, wobei die ersten Horizontalbewegungen senkrecht zu den zweiten Horizontalbewegungen verlaufen;
- eine Schwenkachse C, die eine Schwenkbewegung einer Werkstückspindel 103 und eines daran befestigten (z.B. eingespannten) Werkstücks 30 um eine Horizontalachse R3 ausführt;
- eine Rotationsachse B, die eine Drehbewegung der Werkstückspindel 103 und des daran gelagerten Werkstücks 30 um die Werkstückachse R2 ausführt;
- eine Rotationsachse A1, die eine Drehbewegung einer Werkzeugspindel 21 und eines daran gelagerten Werkzeugs 20 um die Werkzeugachse R1 ausführt.

Ausserdem umfasst die Bearbeitungsmaschine 100 eine Fluidzufuhrvorrichtung 50, die unter Druck ein Fluid durch mindestens eine Austrittsdüse 51 in Richtung einer Bearbeitungszone BZ abgibt. Die Fluidzufuhrvorrichtung 50 ist nicht in Fig. 1 gezeigt. Um eine hohe Förderleistung und eine kurze Förderdistanz gewährleisten zu können, setzt die Erfindung auf eine starr montierbare Fluidzufuhrvorrichtung 50 statt auf flexible Leitungen und schwanenhalsartige schwenkbare Auslassdüsen.

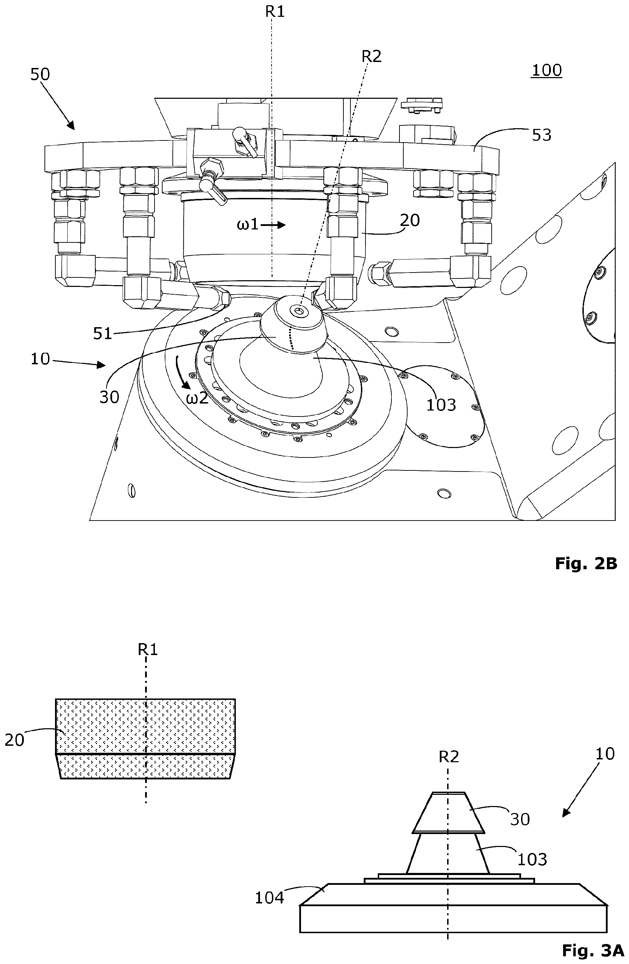

Details einer beispielhaften Ausführungsform einer Fluidzufuhrvorrichtung 50 sind den Figuren 2A und 2B zu entnehmen. Eine solche Fluidzufuhrvorrichtung 50 umfasst mindestens einen Fluidtank (nicht gezeigt), eine Pumpe (nicht gezeigt) und mindestens eine Leitung, um ein Fluid aus dem Tank zu entnehmen und in eine Austrittsdüse 51 zu pumpen. Von dort spritzt das Fluid im Bereich der Bearbeitungszone BZ z.B. auf denjenigen Bereich, in dem im Moment vom Werkzeug 20 Späne am Werkstück 30 abgehoben werden (z.B. beim Verzahnungsfräsen) oder in denjenigen Bereich, in dem im Moment vom Werkzeug 20 Späne am Werkstück 30 abgeschliffen werden (z.B. beim Verzahnungsschleifen).

Typischerweise sitzt die Fluidzufuhrvorrichtung 50 am Werkzeugträger 101 und bewegt sich solidarisch mit diesem. D.h. die Fluidzufuhrvorrichtung 50 folgt den Bewegungen im 3-dimensionalen Raum, die das Werkzeug 20 ausführt, wobei sich die Fluidzufuhrvorrichtung 50 nicht mit der Werkzeugspindel 21 und dem Werkzeug 20 dreht. In Fig. 2A und Fig. 2B ist zu erkennen, dass die Werkzeugspindel 21 samt Werkzeug 20 eine rotationssymmetrische Umhüllende hat. Diese Umhüllende beschreibt denjenigen 3-dimensionalen Raum, in dessen Rotationszentrum die Werkzeugachse R1 sitzt und der entweder vollständig von der Werkzeugspindel 21 samt Werkzeug 20 ausgefüllt ist (das ist z.B. bei einem Schleiftopf 20 nach Fig. 2A und Fig. 2B der Fall), oder der beim Rotieren eines Vollwerkzeugs mit Schneiden, oder eines Messerkopfs, der mit (Stab-)Messern bestückt ist, überstrichen wird. Wenn man sich außerhalb dieser Umhüllenden befindet und sich solidarisch mit dem Werkzeugträger 101 bewegt, ergibt sich keine Kollision mit dem Werkzeug 20 während sich dieses um die Werkzeugachse R1 dreht.

Entsprechend ist in Fig. 2A zu erkennen, dass die Fluidzufuhrvorrichtung 50 ringförmig um die Spindel 21 herum angeordnet sein kann und dass die Austrittsdüse(n) 51 direkt neben der Umhüllenden oder unterhalb einer Stirnseite der Umhüllenden sitzen können, ohne mit dem sich drehenden Werkzeug 20 zu kollidieren.

Nun ist aber zu berücksichtigen, dass es beim Ausführen der eigentlichen produktiven Relativbewegungen zwangsläufig zwischen dem Werkzeug 20 und dem Werkstück 30 zu Berührungen kommt. Das Werkstück 30 muss in den Bereich der Umhüllenden des Werkzeugs 20 eindringen, damit Späne am Werkstück 30 abgehoben werden können, oder das Werkstück 30 muss entlang der Umhüllenden bewegt werden, um dieses zu schleifen. In Fig. 2B ist eine Situation gezeigt, bei der Werkzeug 20 und Werkstück 30 so relativ zueinander bewegt werden, dass eine Berührung unmittelbar bevor steht. Die Werkstückspindel 103 samt Werkstück 30 wurden um die Horizontalachse R3 (siehe Fig. 1) geschwenkt, was daran zu erkennen ist, dass die Rotationsachse R2 windschief zur Rotationsachse R1 steht. Ausserdem wurden Werkzeug 20 und Werkstück 30 durch das Ausführen von Linearbewegungen relativ aufeinander zu bewegt.

Um von vorne herein eine Kollision der Elemente der Fluidzufuhrvorrichtung 50 mit den sich bewegenden Teilen der Bearbeitungsmaschine 100 zu verhindern, wird gemäss Erfindung eine computergesteuerte Simulation der geplanten Bewegungsabläufe des Werkzeugs 20 und des Werkstücks 30 vorgenommen, die beim Nassbearbeiten des Werkstücks 30 ausgeführt werden sollen. Diese Bewegungsabläufe ergeben sich aus der Bestückung der Bearbeitungsmaschine 100, den Achskonstellationen und der Auslegung des Werkstücks 30.

In einem vorbereitenden Schritt wird gemäss Erfindung computergestützt ein sogenannter 3-dimensionaler Kollisionsbereich ermittelt, der beim Nassbearbeiten vom Werkstück 30 samt Spindel 103 und anderen sich mitbewegenden Elementen (hier gesamthaft Werkstückanordnung 10 genannt) der Bearbeitungsmaschine 100 relativ zum Werkzeug 20 durchfahren wird.

Dieser Ansatz wird im Folgenden anhand einer vereinfachten 2-dimensionalen Darstellung der typischen Bewegungsabläufe beim CNCgesteuerten Schleifen eines Kegelrads 30 mit einem Schleiftopf 20 gezeigt.

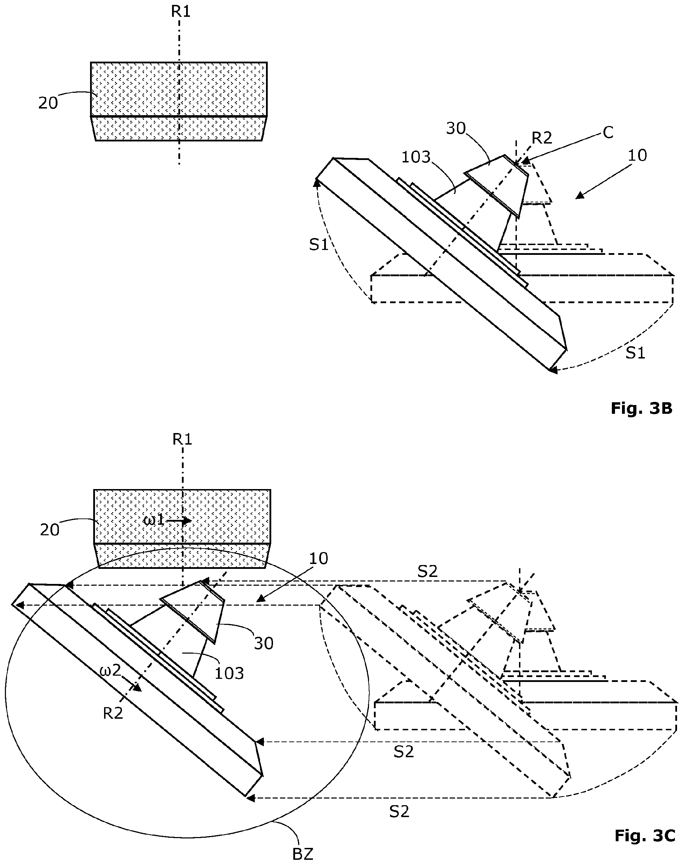

Fig. 3A zeigt eine Ausgangsposition der Werkstückanordnung 10 und des Schleiftopfes 20, wobei die beiden Rotationsachsen R1 und R2 parallel verlaufen. Nun kann z.B. in einem ersten Zustellschritt die Werkstückanordnung 10 um die Schwenkachse C (siehe Fig. 1) um ca. 30 Grad im Uhrzeigersinn geschwenkt werden, wie in Fig. 3B gezeigt. Die entsprechende Schwenkbewegung ist mit S1 bezeichnet. Die Schwenkachse C steht senkrecht auf der Zeichnungsebene. In den Figuren 3A bis 3E ist jeweils die neuste Position/Stellung der Werkstückanordnung 10 mit durchgezogenen Umrandungslinien gezeigt, während die vorherigen Positionen/Stellungen durch gestrichelte Umrandungslinien angedeutet sind. Es handelt sich quasi um eine grafische Darstellungsform, die einer Langzeitbelichtung beim Fotografieren entspricht. Die Bewegungsvektoren sind jeweils schematisch durch gestrichelte Pfeile dargestellt. Fig. 3C zeigt das lineare Zustellen (erste Horizontalbewegung S2 genannt) der Werkstückanordnung 10 in einen Bereich unterhalb des Werkzeugs 20. Die Werkstückanordnung 10 hat jetzt die Bearbeitungszone BZ erreicht, die hier vereinfacht durch einen ovalen Bereich dargestellt ist. Beim Ausführen der ersten Horizontalbewegung S2 erfolgt typischerweise nicht nur eine einfache Linearbewegung der Y-Achse, sondern es wird dieser Bewegung auch eine Linearbewegung der Z-Achse überlagert. Der Einfachheit der Darstellung geschuldet, ist diese Linearbewegung der Z-Achse nicht gezeigt, da es im Zusammenhang mit den Figuren 3A bis 3E nur um die Erläuterung des zugrunde liegenden Prinzips geht.

Es sei hier angemerkt, dass bei der Maschine 100 nach Fig. 1 eigentlich die Schleifscheibe 20 linear bewegt (Y-Achse) wird. Somit erreicht in diesem konkreten Fall nicht das Werkstück 30 die Bearbeitungszone BZ, sondern das Werkzeug 20 wird in die Bearbeitungszone BZ bewegt. Relativ gesehen ändert sich durch diese Umkehr jedoch nicht das hier beschriebene Prinzip.

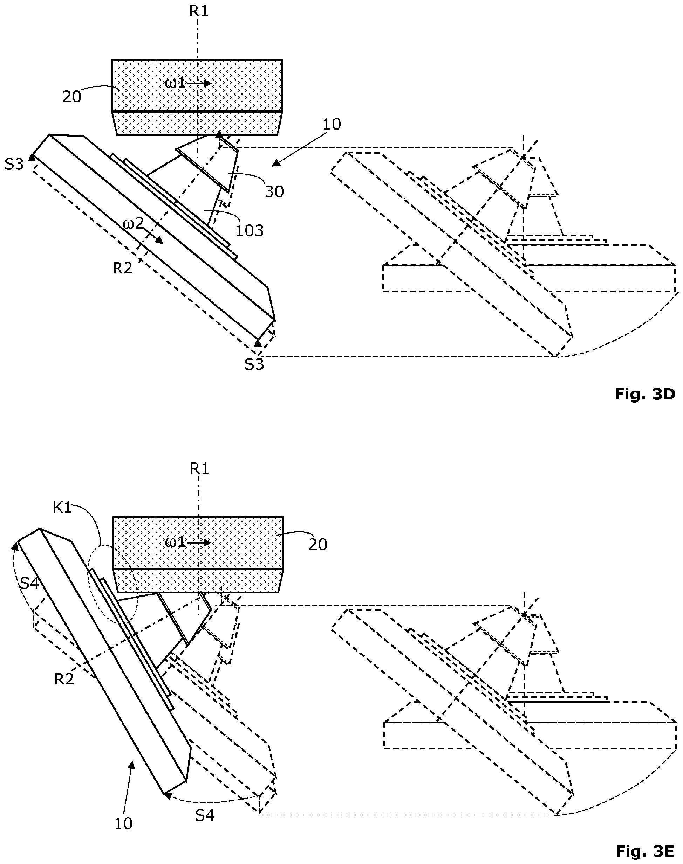

Um nun die Werkstückanordnung 10 mit dem Schleiftopf 20 in Eingriff zu bringen, wird eine relative, lineare Zustellbewegung der X-Achse ausgeführt (erste Vertikalbewegung S3 genannt), wie in Fig. 3D angedeutet. Der Kopfbereich des zu schleifenden Kegelrads 30 taucht ein kleines Stück ins Innere des Schleiftopfes 20 ein und der umlaufende, mit Schleifmaterial belegte Rand des Schleiftopfes 20 dringt im Kopfbereich des zu schleifenden Kegelrads 30 in eine Zahnlücke (nicht gezeigt) ein. Spätestens bevor es zu einer Berührung von Schleiftopf 20 und Kegelrad 30 kommt, werden beide um ihre jeweiligen Rotationsachsen R1 bzw. R2 in Rotationsbewegung versetzt, d.h. die Rotationsbewegungen ω1 und ω2 sind beim spanabhebenden Bearbeiten ungleich Null.

Um die gesamte Zahnlücke des Kegelrads 30 vom Kopfbereich bis zur Ferse schleifen zu können, wird eine Relativbewegung S4 ausgeführt, wie in Fig. 3E angedeutet, die sich typischerweise aus einer Überlagerung mehrerer Bewegungen ergibt. Beim Schleifen eines Kegelrads 30 mit einer Topfschleifscheibe 20 in einer Bearbeitungsmaschine 100, wie in Fig. 1 gezeigt, wird beispielsweise eine Schwenkbewegung um die Schwenkachse C mit Linearbewegungen der Y- und Z-Achsen überlagert. Diese Bearbeitungsphase ist bei der gezeigten Konstellation besonders kritisch, da ausladende Elemente oder Bereiche der Werkstückanordnung 10 sehr nahe an den äusseren Umfang des Schleiftopfs 20 gelangen können, wie vor allem im Bereich K1 ersichtlich ist.

Ein Teil der Bewegungsabläufe wird nun wiederholt, bis jede Zahnlücke des Kegelrads 30 fertig geschliffen ist. Dann erfolgt eine relative Rückzugsbewegung (nicht gezeigt).

Zu den Bewegungen, die in der 2-dimensionalen, vereinfachten Betrachtung der Figuren 3A bis 3E gezeigt sind, kommen auch Bewegungen in die Tiefe (parallel zur Z-Achse), die bei der schematischen Darstellung nicht berücksichtig wurden. Insgesamt ergibt sich aus den Relativbewegungen der bereits erwähnte 3-dimensionale Kollisionsbereich KA.

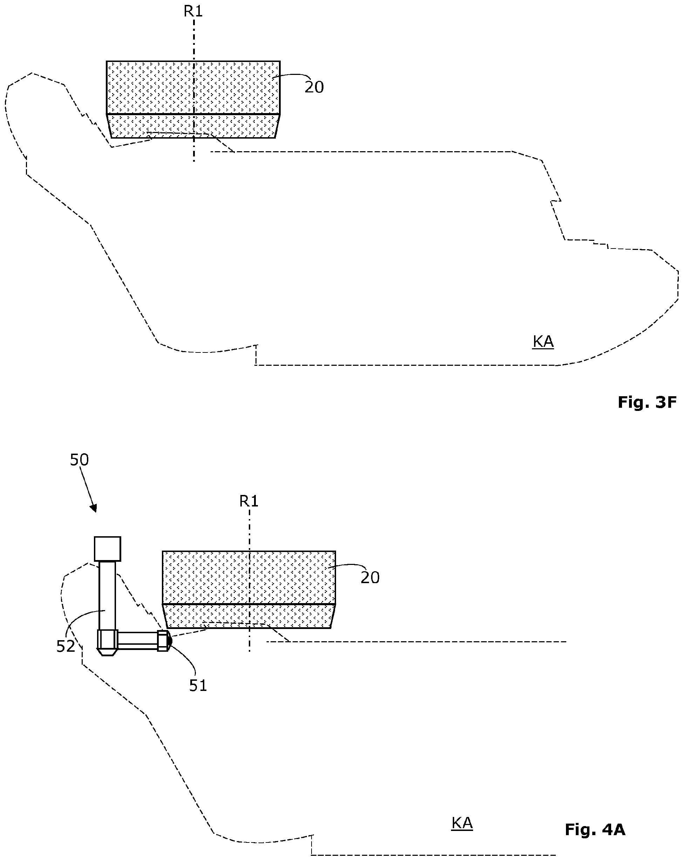

Fig. 3F zeigt einen Schnitt durch den 3-dimensionalen Kollisionsbereich KA, der sich aus den Bewegungen ergibt, die in den Figuren 3A bis 3E gezeigt sind. Um die Darstellung nicht zu verkomplizieren, wurde in den Figuren 3A bis 3E angenommen, dass sich die Topfschleifscheibe 20 nur um die Rotationsachse R1 dreht, selbst aber keine anderen Bewegungen (z.B. entlang der X-Achse) ausführt.

Ein anderer theoretischer Extremfall wäre, dass nur die Werkzeugspindel 21 samt Topfschleifscheibe 20 Bewegungen ausführt und dass das Werkstück 30 sich nicht von der Stelle bewegt, sondern nur um die Rotationsachse R2 rotiert. In diesem Fall könnte man der Werkzeugspindel 21 samt Topfschleifscheibe 20 und Fluidzufuhrvorrichtung 50 einen 3-dimensionalen Kollisionsbereich KB zuordnen.

Durch Koordinatentransformationen kann man den 3-dimensionalen Kollisionsbereich KA in den 3-dimensionalen Kollisionsbereich KB, und umgekehrt, umrechnen.

In der Praxis geht es stets um Relativbewegungen und es wird entsprechend ein relativer Kollisionsbereich KR ermittelt.

Fig. 4A zeigt einen Abschnitt des Bewegungsraumes (Kollisionsbereich KA) nach Fig. 3F, wobei stark schematisiert neben dem Werkzeug 20 eine beispielhafte Austrittsdüse 51 samt Fluidzufuhr 52 dargestellt ist. Im gezeigten Beispiel wird davon ausgegangen, dass die Austrittsdüse 51 samt Fluidzufuhr 52 in der Zeichenebene liegt und somit in dem Kollisionsbereich KA ragt. Konkret würde in diesem vereinfacht dargestellten Beispiel eine Adapterplatte 104 (siehe Fig. 3A) der Werkstückspindel 103 mit der Austrittsdüse 51 und der Fluidzufuhr 52 kollidieren, sobald die Bewegungen der Figuren 3D und 3E ausgeführt werden. Die in Fig. 4A gezeigte Position der Austrittsdüse 51 und der Fluidzufuhr 52 ist daher nicht geeignet.

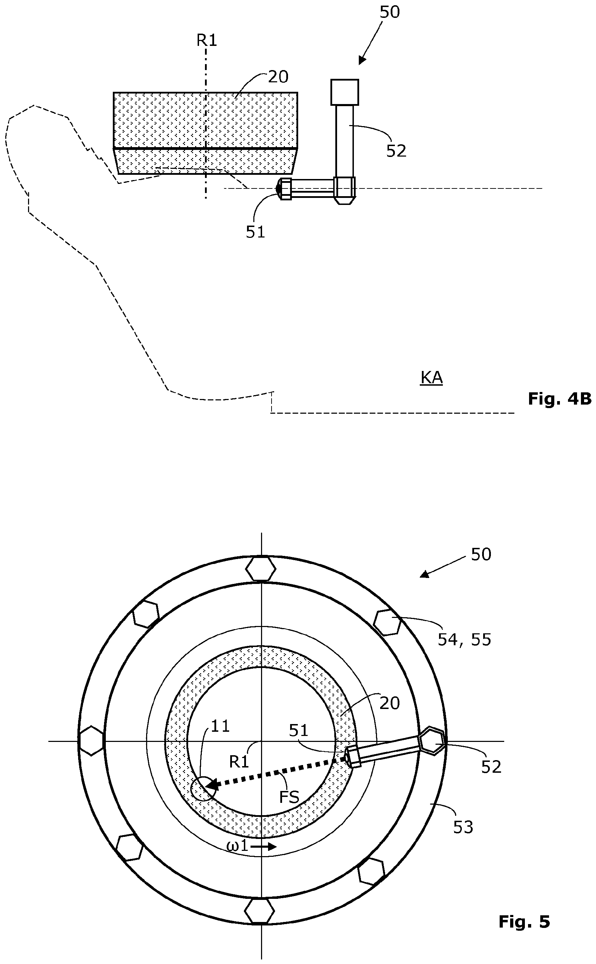

Fig. 4B zeigt den selben Abschnitt des Bewegungsraumes (Kollisionsbereich KA) nach Fig. 3F, wobei stark schematisiert rechts neben dem Werkzeug 20 eine Austrittsdüse 51 samt Fluidzufuhr 52 dargestellt ist. In dieser Position würde mindestens die Austrittsdüse 51 mit dem Werkstück 30 kollidieren. Zu dieser Kollision käme es während die Werkstückanordnung 10 die in Fig. 3C gezeigte Verlagerungsbewegung ausführt. Damit scheint gesetzt zu sein, dass auch die in Fig. 4B gezeigte Position der Austrittsdüse 51 und der Fluidzufuhr 52 nicht geeignet ist. Es ist nun aber zu berücksichtigen, dass ein Unterschied zwischen sogenannten Produktivbewegungen und Zustellbewegungen gemacht werden muss. Produktivbewegungen sind Relativbewegungen, die effektiv ausgeführt werden, um z.B. die Zahnflanken des Werkstücks 30 mit dem Schleiftopf 20 zu bearbeiten. Die Zustellbewegungen dienen dazu das Werkstück 30 und Werkzeug 20 relativ zueinander so zu positionieren, dass die Bearbeitung, d.h. das Ausführen der Produktivbewegungen, beginnen kann.

Bezogen auf das stark schematisierte Beispiel der Figuren 3A bis 3E kann festgestellt werden, dass es sich bei den Bewegungen der Figuren 3A, 3B, 3C und 3D um reine Zustellbewegungen handelt. Lediglich die Bewegungen der Fig. 3E sind hier Produktivbewegungen. Das bedeutet aber, dass die Kollision, die nach Fig. 4B eintreten könnte, wenn die Austrittsdüse 51 samt Fluidzufuhr 52 rechts vom Werkzeug 20 in der Zeichenebene liegt, vermieden werden kann, indem man die Zustellbewegungen etwas anders ausführt. So könnte man z.B. die Werkstückanordnung 10 erst nach links verschieben (entlang des Vektors S2 in Fig. 3C), bevor die Werkstückanordnung 10 die Schwenkbewegung S1 (siehe Fig. 3B) ausführt. Allein durch dieses beispielhafte Umstellen der Schrittreihenfolge könnte eine Kollision bereits vermieden werden.

Neben der reinen Kollisionsbetrachtung gibt es aber einen weiteren Aspekt, der zu berücksichtigen ist. Um eine optimale Kühlung und/oder Schmierung und/oder Reinigung zu erreichen, muss das Fluid auf direktem Weg in den kritischen Bereich gespritzt werden können. Ausserdem spielt der Auftreffwinkel, je nach Bearbeitungsverfahren und Konstellation, eine Rolle. So möchte man - zum Beispiel dort wo eine spanabhebende Bearbeitung statt findet - in einen Zahnzwischenraum (Zahnlücke) spritzen können.

Gemäss Erfindung wird anhand von Vorgaben rechnerisch ermittelt, wo Fluidstrahlen FS verlaufen müssten, um eine optimale Kühlung und/oder Schmierung zu erreichen. Diesen Fluidstrahlen FS folgt man dann vom kritischen Bereich rückwärts betrachtet in Richtung zur Austrittsdüse 51. So lassen sich eine mögliche Position oder mehrere mögliche Positionen für die Austrittsdüse(n) 51 ermitteln. Nun folgt die bereits beschriebene Kollisionsbetrachtung.

Um auf das Beispiel der Figuren 4A und 4B zurück zu kommen, würde der Ermittlungsablauf gemäss Erfindung wie folgt von statten gehen. Es wird hier angenommen, dass die beiden rechnerisch ermittelten und wie in Fig. 4A (links vom Werkzeug 20) und Fig. 4B (rechts vom Werkzeug 20) angeordneten Austrittsdüsen 51 beide eine optimale Kühlung und/oder Schmierung ermöglichen würden, weil die Fluidstrahlen jeweils ideal in den kritischen Bereich gespritzt werden können. Dann folgt die beschriebene Kollisionsbetrachtung, um festzustellen, dass die Anordnung nach Fig. 4A nicht und die Anordnung nach Fig. 4B nur bedingt geeignet ist. Als Lösung würde man sich für die Anordnung nach Fig. 4B entscheiden, wobei jedoch Anpassungen bei den Zustellbewegungen gemacht werden müssen.

Anders als in diesem Beispiel beschrieben, werden diese Ermittlungen für die möglichen Position(en) der Austrittsdüsen 51 und die anschließende Kollisionsbetrachtung im Dreidimensionalen durchgeführt.

Beim Ermitteln der möglichen Position(en) der Austrittsdüse(n) 51 wird vorzugsweise hierarchisch vorgegangen, indem zuerst die optimale(n) Position(en) und dann Schritt für Schritt die weniger optimalen Positionen rechnerisch einer Kollisionsbetrachtung unterzogen werden.

Vorzugsweise kommen gemäss Erfindung bei allen Ausführungsformen mindestens zwei oder mehr als zwei Austrittsdüsen 51 zum Einsatz. Somit kann man z.B. aus zwei oder mehr als zwei Richtungen das Fluid in den kritischen Bereich spritzen.

Es gibt auch sogenannte Reinigungsdüsen, die auch gemäss Erfindung angeordnet werden können. Die Reinigungsdüsen sind auf den Bereich der Schleifscheibe 20 nach dem Austritt aus dem Material des Werkstücks 30 gerichtet und dienen der Reinigung der Scheibe 20 von abgetragenen Material das sich auf der Scheibe 20 befindet. Die Erfindung lässt sich im Prinzip auf sämtliche Austrittsdüsen 51 anwenden, unabhängig davon, ob sie als Schmier-, Kühl- oder Reinigungsdüsen dienen.

Vorzugsweise wird gemäss Erfindung bei allen Ausführungsformen die Position der Austrittsdüsen 51 mit einem Wichtungsfaktor (Effizienzfaktor für die Ausrichtung) wie folgt versehen. Eine Austrittsdüse 51 in optimaler Position kann zum Beispiel die Wichtung 1 erhalten, während eine weniger effiziente Position eine Wichtung 1/2 haben kann. Anhand eines Beispiels wird verdeutlicht, dass z.B. zwei Austrittsdüsen 51 (je mit Wichtung 1/2) in weniger effizienten Positionen trotzdem die Wirkung einer Austrittsdüse 51 mit Wichtung 1 erreichen können, da gilt 1/2 + 1/2 = 1.

Neben der reinen Wichtung aufgrund der Position und des Verlaufs der Fluidstrahlen, kann bei allen Ausführungsformen auch die Abgabeleistung der Austrittsdüsen 51 berücksichtigt werden. Dieser Ansatz kommt aber nur dann zur Anwendung, wenn es die Fluidzufuhrvorrichtung 50 erlaubt den einzelnen Austrittsdüsen 51 unterschiedliche Abgabeleistungen zuzuweisen. Eine Austrittsdüse 51 mit grosser Abgabeleistung kann zum Beispiel auch dann eine gute Kühlung und/oder Schmierung ermöglichen, wenn sie an einer weniger geeigneten Position sitzt. Auch für die Abgabeleistung der Austrittsdüsen 51 kann eine Wichtung zugeordnet werden. Eine Wichtung 1 entspricht der normalen Abgabeleistung. Wenn man mehr Fluid pro Zeiteinheit abgeben möchte, kann zum Beispiel eine Austrittsdüse 51 mit Wichtung 1.5 eingesetzt werden. Ausserdem kann man bei Schleifscheiben 20, die als Werkzeug dienen, auch die Richtung des Fluidstrahls FS in Bezug zur Drehrichtung des Werkzeugs berücksichtigen. Je nach Richtung des Fluidstrahls FS kann das Fluid von der Schleifscheibe 20 "mitgezogen" oder "weggeschleudert" werden.

Das Verfahren der Erfindung basiert auf dem Einsatz einer extrem leistungsfähigen Fluidmittelversorgung (Fluidzufuhrvorrichtung 50), die eine hohe Förderleistung und eine kurze Förderdistanz aufweist. Um eine hohe Förderleistung und eine kurze Förderdistanz gewährleisten zu können, setzt die Erfindung auf eine Fluidzufuhrvorrichtung 50 mit starr montierbarer Ringleitung 53.

Fig. 5 zeigt eine stark schematisierte Unteransicht eines als Werkzeug dienenden Schleiftopfs 20 und einer Fluidzufuhrvorrichtung 50 mit gemeinsamer Ringleitung 53. Diese gemeinsame Ringleitung 53 sitzt koaxial zur Werkzeugachse R1. Der Schleiftopf 20 kann sich frei innerhalb der ringförmig angelegten Fluidzufuhrvorrichtung 50 um die Werkzeugachse R1 drehen, ohne mit Elementen der Fluidzufuhrvorrichtung 50 zu kollidieren. Diese Drehbewegung (hier gegen den Uhrzeigersinn) ist mit ω1 bezeichnet.

Je nach Ausführungsform der Erfindung, können an der Ringleitung 53 mehrere Andockstellen 54 zum Ankoppeln von Fluidzufuhrleitungen 52 vorgesehen sein. In Fig. 5 ist eine Ausführungsform gezeigt, bei der die Ringleitung 53 eine echte Ringform aufweist und bei der die Ringleitung 53 mit acht Andockstellen 54 ausgestattet ist. Diese Andockstellen 54 können bei allen Ausführungsformen mit Blinddeckeln 55 zugeschraubt sein. Falls eine der Andockstellen 54 zum Einsatz kommen soll, wird der Blinddeckel 55 entfernt und es wird eine Fluidzufuhrleitung 52 mit einer Austrittsdüse 51 angesteckt (falls eine Steckkupplung vorhanden ist) oder angeschraubt (falls eine Schraubverbindung vorgesehen ist). In Fig. 5 ist ein Beispiel gezeigt, bei dem eine Fluidzufuhrleitung 52 mit einer Austrittsdüse 51 an der 3 Uhr Position angeschraubt wurde. Weiterhin ist in Fig. 5 beispielhaft angedeutet, dass die Austrittsdüse 51 leicht schräg angestellt ist. Die Austrittsdüsen 51 werden vorzugsweise bei allen Ausführungsformen der Erfindung leicht schräg angestellt und zeigen daher typischerweise nicht in radialer Richtung bezogen auf die Werkzeugachse R1.

In Fig. 5 ist ein beispielhafter Fluidstrahl FS gezeigt, der ausgehend von der Austrittsdüse 51 auf einen kritischen Bereich 11 gerichtet ist.

Die gemeinsame Ringleitung 53 kann auch bei allen Ausführungsformen der Erfindung eine Polygonenform (z.B. die Form eines Sechs- oder Achtecks) haben, wie in den Figuren 2A, 2B gezeigt.

Anders als bisher beschrieben, können alternativ zuerst computergestützt Freiräume festlegt werden, die beim Nassbearbeiten des Werkstücks 30 weder von der Werkstückanordnung 10 noch vom Werkstück 30 durchfahren werden. Diese Freiräume werden vorzugsweise so festgelegt, dass sie eine Direktlinie zwischen einer Austrittsdüse 51 und dem kritischen Bereich 11 einschließen. Ein möglicher Freiraum kommt nämlich nur dann theoretisch in Frage, wenn eine Austrittsdüse 51 in diesem Freiraum einen direkten (unverstellbaren und geradlinigen) Zugang zu dem kritischen Bereich 11 ermöglicht.

Nach dem einer oder mehrere theoretische Freiräume in einem computergestützten Ermittlungsverfahren ermittelt wurden, kann bei diesem Alternativansatz nun für jeden der Freiräume ermittelt werden, ob der direkte (unverstellbare und geradlinige) Zugang zu dem kritischen Bereich 11 einen gewünschten Kühl- oder Schmiereffekt bewirken würde. In diesem Verfahrensschritt können weniger geeignete Freiräume und entsprechende Positionierungen der Austrittsdüsen 51 von besonders geeigneten Freiräumen und entsprechenden Positionierungen unterschieden werden. Anhand einer optionalen Gewichtungsbetrachtung (wie oben erwähnt) kann dann entschieden werden wie viele Austrittsdüsen 51 zum Einsatz kommen und ob gegebenenfalls Austrittsdüsen 51 mit unterschiedlicher Abgabeleistung eingesetzt werden müssen.

Vorzugsweise kommt eine Anzeige 12 (z.B. in Form eines Bildschirms) zum Einsatz, um das Ergebnis des computergestützten Ermittlungsverfahrens anzeigen zu können.

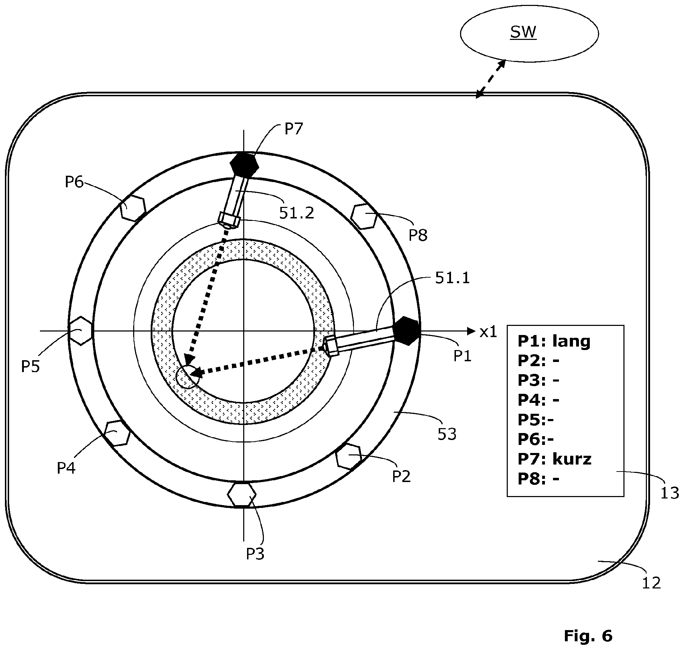

In Fig. 6 ist eine beispielhafte Anzeige 12 gezeigt. Im gezeigten Moment wird eine Abbildung gezeigt, die im Wesentlichen der Abbildung nach Fig. 5 entspricht. Es ist ein Anblick von unten auf ein Werkzeug 20 (hier ein Schleiftopf) und auf die ringförmig angelegte Fluidzufuhrvorrichtung 50 mit Ringleitung 53 gezeigt. An der Ringleitung 53 sind hier acht Positionen P1 - P8 vorgesehen, um Austrittsdüsen 51 anzuschließen. Im gezeigten Beispiel gibt es zwei Typen von Austrittsdüsen 51 und zwar eine Langversion 51.1 und eine Kurzversion 51.2.

Das Ausführen des computergestützten Ermittlungsverfahrens hat ergeben, dass die Positionen P1 und P7 mit Austrittsdüsen 51 zu bestücken sind. Diese beiden Positionen können zum Beispiel grafisch hervorgehoben werden (hier durch schwarz gefärbte Deckel). Zusätzlich kann auf der Anzeige 12 die Bestückung aller Positionen P1 - P8 als Textlegende (wie zum Beispiel in dem Einschubfenster 13 gezeigt) dargestellt werden. Im gezeigten Beispiel wird dargestellt, dass die Position P1 mit einer Langversion 51.1 und die Position P7 mit einer Kurzversion 51.2 zu bestücken sind. Die Positionen P2, P3, P4, P5, P6 und P8 bleiben leer (hier sind vorzugsweise Blinddeckel 55 montiert).

Weiterhin kann, um das Einstellen zu erleichtern, auch die Orientierung/Richtung der jeweiligen Austrittsdüsen 51 angegeben werden. Bei der Langversion 51.1 in Position P1 könnte die Angabe z.B. lauten: - 10 Grad (bezogen auf die Horizontalachse x1). Bei der Kurzversion 51.2 in Position P7 könnte die Angabe z.B. lauten: - 80 Grad (bezogen auf die Horizontalachse x1)

Vorzugsweise ist die Fluidzufuhrvorrichtung 50 bei allen Ausführungsformen mit Einstell- und/oder Anzeigemitteln versehen, um ein gradgenaues Ausrichten der Austrittsdüsen 51 zu ermöglichen.

Je nach Ausführungsform kann zum Beispiel das Andocken der Austrittsdüsen 51 in verschiedenen Rastpositionen (z.B. mit einer Winkeleinteilung von 10 Grad Schritten) vorgesehen sein.

Je nach Ausführungsform kann zum Beispiel im Bereich einer jeden Position P1 - P8 eine Winkelskala angebracht sein, so dass beim Andocken einer Austrittsdüse 51 eine Markierung an der Austrittsdüse 51 mit der Skala in Deckung gebracht wird.

Je nach Ausführungsform kann zum Beispiel auch eine Schablone ausgegeben werden (z.B. über einen Drucker), damit das Einrichten einfacher von Statten gehen kann.

Je nach Ausführungsform können zum Beispiel auch Sensoren eingesetzt werden, um das richtige Andocken und Ausrichten der Austrittsdüsen 51 durch die CNC Steuerung oder durch eine entsprechende Software SW überwachen zu können. Falls eine solche Lösung mit Sensoren zum Einsatz kommt, kann das Anfahren der Bearbeitungsmaschine 100 davon abhängig gemacht werden, dass das korrekte Andocken und Ausrichten erfolgt ist. So können im Falle von Fehlbestückungen Kollisionen von vorne herein vermieden werden.

Je nach Ausführungsform kann die Software SW zum computergestützten Ausführen des Ermittlungsverfahrens, so programmiert sein, dass sie eine Änderung der Zustellwege automatisch vornehmen kann. In diesem Fall würde diese Software SW die Zustellwege anpassen, um eine Kollision beim Ausführen der Zustellbewegungen zu vermeiden. Vorzugsweise erfolgt diese Änderung der Zustellwege jedoch nicht automatisch, sondern erst nachdem ein Bediener auf die anstehende Änderung aufmerksam gemacht wurde. Der Bediener kann die vorgeschlagenen Änderungen dann akzeptieren, oder er kann manuell andere Einstellungen vornehmen.

**Bezugszeichenliste**

| | |
|---|---|
| Werkstückanordnunq | 10 |
| kritischer Bereich | 11 |
| Anzeige | 12 |
| Einschubfenster | 13 |
| Werkzeug | 20 |
| Werkzeugspindel | 21 |
| Werkstück / zu bearbeitendes Bauteil | 30 |
| Fluidzufuhrvorrichtunq | 50 |
| Austrittsdüse | 51 |
| Fluidzufuhr | 52 |
| Ringleitung | 53 |
| Andockstellen | 54 |
| Blinddeckel | 55 |
| Bearbeitungsmaschine | 100 |
| Werkzeuqträqer | 101 |
| Maschinenbett | 102 |
| Werkstückspindel | 103 |
| Adapterplatte | 104 |
| Bearbeitunqszone | BZ |
| Schwenkachse | C |
| Computerized Numerical Control | CNC |
| Fluidstrahl | FS |
| Kollisionsbereich | KA |
| Kollisionsbereich | KB |
| relativer Kollisionsbereich | KR |
| Bereich | K1 |
| Werkzeugachse | R1 |
| Werkstückachse | R2 |
| Horizontalachse | R3 |
| Schwenkbewequnq | S1 |
| Horizontalbewegung | S2 |
| Vertikalbewequnq | S3 |
| Relativbewequnq | S4 |
| Linearachse | X |
| Horizontalachse | x1 |
| Linearachse | Y |
| Linearachse | Z |
| Rotationsbewegung des Werkzeugs | ω1 |
| Rotationsbewegung des Werkstücks | ω2 |

## Patentansprüche

1. Verfahren zum spanabhebenden Bearbeiten eines Bauteils (30) auf einer Bearbeitungsmaschine (100) mit einerWerkzeugachse (R1), einer CNC gesteuerten Werkstückachse (R2) und einer Fluidzufuhrvorrichtung (50), die unter Druck ein Fluid durch mindestens eine Austrittsdüse (51) in Richtung einer Bearbeitungszone (BZ) abgibt, wobei ein Werkzeug (20), das an einer Werkzeugspindel (21) gelagert ist, um die Werkzeugachse (R1) und das Bauteil (30) um die Werkstückachse (R2) drehantreibbar sind, **dadurch gekennzeichnet, dass** das Verfahren die folgenden Schritte umfasst:
- Ausführen einer computergestützten Simulation der geplanten Bewegungsabläufe des Werkzeugs (20) und des Bauteils (30), die beim Bearbeiten des Bauteils (30) ausgeführt werden sollen, um einen 3-dimensionalen Kollisionsbereich (KA, KB, KR) festzulegen, der beim Bearbeiten des Bauteils (30) vom Werkzeug (20) und/oder Bauteil (30) durchfahren wird,
- computergestütztes Festlegen von mindestens einer möglichen Position (P1, P7) für das Anbringen einer Austrittsdüse (51) an der Fluidzufuhrvorrichtung (50), wobei diese Position außerhalb des 3-dimensionalen Kollisionsbereichs (KA, KB, KR) liegt und wobei diese Position eine Direktlinie eines Fluidstrahls (FS) zwischen der Austrittsdüse (51) und der Bearbeitungszone (BZ) ermöglicht, und dass
- die Fluidzufuhrvorrichtung (50) ringförmig um die Werkzeugspindel (21) herum angeordnet ist,
- und die Fluidzufuhrvorrichtung (50) den Bewegungen im 3-dimensionalen Raum folgt, die das Werkzeug (20) ausführt, wobei sich die Fluidzufuhrvorrichtung (50) nicht mit der Werkzeugspindel (21) und dem Werkzeug (20) dreht.

2. Verfahren nach Anspruch 1, **dadurch gekennzeichnet, dass** die Position (P1, P7) so durch das computergestützte Verfahren festgelegt wird, dass beim Bearbeiten des Bauteils (30) weder vom Werkzeug (20) noch von dem Bauteil (30) der 3-dimensionale Bereich durchfahren wird, in dem die Austrittsdüse (51) angebracht werden soll.

3. Verfahren nach Anspruch 1 oder 2, **dadurch gekennzeichnet, dass** auf einer Anzeige (12) die mindestens eine mögliche Position (P1, P7) für das Anbringen einer Austrittsdüse (51) dargestellt wird.

4. Verfahren nach Anspruch 3, **dadurch gekennzeichnet, dass** in einem Schritt eine Austrittsdüse (51) in einer der möglichen Positionen (P1, P7) mit der Fluidzufuhrvorrichtung (50) verbunden wird.

5. Verfahren nach Anspruch 4, **dadurch gekennzeichnet, dass** diese Austrittsdüse (51) in einem nachgelagerten Schritt ausgerichtet wird, um den Fluidstrahl (FS) in Richtung eines kritischen Bereichs (11) abgeben zu können.

6. Verfahren nach Anspruch 3, **dadurch gekennzeichnet, dass** zusätzlich zu der möglichen Position (P1, P7) für das Anbringen einer Austrittsdüse (51) auch die Ausrichtung und/oder der Typ der Austrittsdüse (51) dargestellt wird.

7. Verfahren nach einem der Ansprüche 1 - 6, **dadurch gekennzeichnet, dass** die Bearbeitungsmaschine (100) sechs CNC gesteuerte Achsen und eine CNC-Steuerung umfasst, wobei eine Software (SW) zum Ausführen der computergestützten Simulation und zum computergestützten Festlegen zum Einsatz kommt.

8. Verfahren nach Anspruch 7, **dadurch gekennzeichnet, dass** die Software (SW) Wichtungen vorgeben kann als Effizienzfaktor für die Ausrichtung des Fluidstrahls (FS) und/oder für die Abgabeleistung der Austrittsdüse(n) (51).

9. Verfahren nach Anspruch 1, **dadurch gekennzeichnet, dass** die Werkzeugspindel (21) samt Werkzeug (20) und Fluidzufuhrvorrichtung (50) dem 3-dimensionalen Kollisionsbereich (KB) zugeordnet ist.

## Claims

1. Method for the chip-producing processing of a workpiece (30) on a processing machine (100) with a tool axis (R1), a CNC-controlled workpiece axis (R2), and a fluid supply apparatus (50), which emits fluid under pressure through at least one discharge nozzle (51) towards a processing zone (BZ), whereby a tool (20), which is mounted at a tool spindle (21) to be rotatable about the tool axis (R1) and the workpiece (30) about the workpiece axis (R2), **characterized in that** the method comprises the following steps:
- carrying out a computer-aided simulation of the motion sequences of the tool (20) and the workpiece (30) planned, which are being carried out when the processing of the workpiece (30) is being carried out, in order to define a 3-dimensional collision area (KA, KB, KR), which, during the processing of the workpiece (30), is being passed through by the tool (20) and/or the workpiece (30),
- computer-aided definition of at least one possible position (P1, P7) for mounting of a discharge nozzle (51) on the fluid supply apparatus (50), whereby this position lies outside the 3-dimensional collision area (KA, KB, KR) and whereby this position enables a direct line of a fluid jet (FS) between the discharge nozzle (51) and the processing zone (BZ),
and that
- the fluid supply apparatus (50) is annularly arranged around the tool spindle (21),
- and the fluid supply apparatus (50) follows the movements, which the tool (20) performs, in the 3-dimensional space, whereby the fluid supply apparatus (50) does not rotate with the tool spindle (21).

2. The method according to claim 1, **characterized in that** the position (P1, P7) is defined by the computer-aided method so that, when processing the work piece (30), the 3-dimensional area in which the discharge nozzle (51) is to be mounted is neither passed through by the tool (20) nor by the workpiece (30).

3. The method according to claim 1 or 2, **characterized in that** the at least one possible position (P1, P7) for the mounting of the discharge nozzle (51) is depicted on a display (12).

4. The method according to claim 3, **characterized in that** in a step a discharge nozzle (51) is being connected to the fluid supply apparatus (50) at one of the possible positions (P1, P7).

5. The method according to claim 4, **characterized in that** in a subsequent step the discharge nozzle (51) is being oriented in order to be able to emit the fluid jet (FS) in the direction of a critical area (11).

6. The method according to claim 3, **characterized in that** the orientation and/or type of the discharge nozzle (51) is depicted in addition to the possible position (P1, P7).

7. The method according to one of the claims 1 - 6, **characterized in that** the processing machine (100) comprises six CNC controlled axis and a CNC control, wherein a software (SW) for carrying out the computer-aided simulation and for the computer-aided definition is employed.

8. The method according to claim 7, **characterized in that** software (SW) is able to carry out weightings as efficiency factors for the orientation of the fluid jet (FS) and/or for the output performance of the discharge nozzle(s) (51).

9. The method according to claim 1, **characterized in that** the tool spindle (21) together with the tool (20) and the fluid supply apparatus (50) is assigned to belong to the 3-dimensional collision area (KB).

## Revendications

1. Procédé de traitement par enlèvement de copeaux d'un composant (30) sur une machine de traitement (100) comprenant un axe d'outil (R1), un axe de pièce (R2) à commande CNC et un dispositif d'amenée de fluide (50) qui, sous pression, libère un fluide par au moins une buse de sortie (51) en direction d'une zone de traitement (BZ), un outil (20) monté sur une broche d'outil (21) pouvant être entraîné en rotation autour de l'axe d'outil (R1) et le composant (30) pouvant être entraîné en rotation autour de l'axe de pièce (R2), **caractérisé en ce que** le procédé comprend les étapes suivantes consistant à :
- réaliser une simulation par ordinateur des mouvements envisagés de l'outil (20) et du composant (30) devant être effectués lors du traitement du composant (30) pour définir une zone de collision tridimensionnelle (KA, KB, KR) qui est traversée lors du traitement du composant (30) par l'outil (20) et/ou le composant (30),
- déterminer par ordinateur au moins une position possible (P1, P7) pour installer une buse de sortie (51) sur le dispositif d'amenée de fluide (50), cette position étant en-dehors de la zone de collision tridimensionnelle (KA, KB, KR), et cette position permettant une ligne directe d'un jet de fluide (F5) entre la buse de sortie (51) et la zone de traitement (BZ), et **en ce que**
- le dispositif d'amenée de fluide (50) est agencé de façon circulaire autour de la broche d'outil (21),
- le dispositif d'amenée de fluide (50) suit, dans l'espace tridimensionnel, les mouvements effectués par l'outil (20), le dispositif d'amenée de fluide (50) ne tournant pas avec la broche d'outil (21) et l'outil (20).

2. Procédé selon la revendication 1, **caractérisé en ce que** la position (P1, P7) est déterminée par le procédé informatique de sorte que, lors du traitement du composant (30), la zone tridimensionnelle dans laquelle doit être montée la buse de sortie (51), n'est traversée ni par l'outil (20) ni par le composant (30).

3. Procédé selon la revendication 1 ou 2, **caractérisé en ce qu'**il est représenté sur un écran (12) la au moins une position possible (P1, P7) pour l'installation d'une buse de sortie (51).

4. Procédé selon la revendication 3, **caractérisé en ce que**, dans une étape, une buse de sortie (51), dans l'une des positions possibles (P1, P7), est raccordée avec le dispositif d'amenée de fluide (50).

5. Procédé selon la revendication 4, **caractérisé en ce que** cette buse de sortie (51), dans une étape en aval, est orientée pour pouvoir émettre le jet de fluide (FS) en direction d'une zone critique (11).

6. Procédé selon la revendication 3, **caractérisé en ce que**, en plus de la position possible (P1, P7) pour l'installation d'une buse de sortie (51), il est également représenté l'orientation et/ou le type de la buse de sortie (51).

7. Procédé selon l'une des revendications 1 à 6, **caractérisé en ce que** la machine de traitement (100) comprend six axes à commande CNC et une commande CNC, un logiciel (SW) étant utilisé pour réaliser une simulation et une détermination par ordinateur.

8. Procédé selon la revendication 7, **caractérisé en ce que** le logiciel (SW) peut prescrire des pondérations comme facteur d'efficacité pour l'orientation du jet de fluide (FS) et/ou pour la puissance de la ou des buses de sortie (51).

9. Procédé selon la revendication 1, **caractérisé en ce que** la broche d'outil (21) avec l'outil (20) et le dispositif d'amenée de fluide (50), est associée à la zone de collision tridimensionnelle (KB).
